# EUROPEAN PATENT APPLICATION

(11) **EP 4 435 983 A1**
(43) Date of publication of application: **25.09.2024**
(21) Application number: 23162998.1
(22) Date of filing: 20.03.2023
(51) Int. Cl.: H02G 1/12, H01R 43/28

(54) **STRIPPING TOOL FOR AUTOMATED SYSTEM, SYSTEM AND METHOD**

(71) Applicant: Aptiv Technologies Limited, 14004 St. Michael (BB)
(72) Inventor: MANTERYS, Marek, 31-416 Kraków (PL); MEDEIROS FERREIRA DA SILVA, Marco Ruben, 1675-072 Odivelas (PT); ANUNCIACAO, Filipe, 2855-664 Corroios (PT)
(74) Representative: INNOV-GROUP

(57) **Abstract**

A stripping tool (200) for stripping an end portion of an electric wire (300) having an electric conductor covered by an insulating sheath,
the stripping tool comprising :
- a body with a receiving portion (230) arranged to receive the end portion,
- a lever (210) articulated with the body so as to be moveable between a rest position and a deflected position,
- an elastic member (240) arranged to apply a return force on the lever, wherein the lever has an guiding portion (212) arranged in front of the receiving portion, so that the at least one lever is moved from the rest position to the deflected position by insertion of the end portion, and
wherein the lever has an abutting tab portion (213) arranged to apply a stripping effort to the end portion during removal of the end portion out of the receiving portion.

## Description

### TECHNICAL FIELD

The present disclosure relates to the field of electric wires, in particular splicing or welding thereof. This is of interest in the automotive industry in particular, for example for electrical grounding or electrical earthing.

### BACKGROUND

Tools and apparatus for splicing or welding of electric wires are known in the art. Existing way of manufacturing consists in making manual butt or dual end splice (inline splice).

Manual splicing has a lot of quality problems and consumes manpower. Automatic butt splice solution is not very developed, in particular because of the lower volume of butt splice configuration (e.g. 15% of splices) compared to volume of dual end splice (e.g. 85% of total splices) in typical projects using splices.

The document CA641470 discloses some background art in the field.

Therefore, there is a need for another kind of solution that is a good trade-off for overcoming the different drawbacks of the prior art.

### SUMMARY

The present disclosure concerns a stripping tool for stripping an end portion of an electric wire having an electric conductor covered by an insulating sheath,
the stripping tool comprising :
   - a body with at least one receiving portion arranged to receive the end portion of the electric wire,
   - at least one lever articulated with the body so as to be moveable between a rest position and a deflected position,
   - an elastic member arranged to apply a return force on the at least one lever from the deflected position to the rest position,
wherein the lever has a guiding portion arranged in front of, or in regard of, the receiving portion, so that the at least one lever is moved from the rest position to the deflected position by insertion of the end portion of the electric wire into the receiving portion, and
wherein the lever has an abutting tab portion arranged to apply a stripping effort to the end portion of the electric wire during removal of the end portion of the electric wire out of the receiving portion

This allows to provide a stripping tool able to cooperate with an automated system. Further, this allows to provide an easy solution for stripping an electric wire, with a simple tool at reduced cost, which is convenient and intuitive to use, for example by an automated system either equipped with a position control and map control (where the hole position is indicated) or hole or receiving portion detector. Further, there is no need of energy supply because of the arrangement of the elastic member.

In other words, the disclosure concerns a stripping tool for receiving at least one electrical wire, the electrical wire having a main insulated portion, an insulated end portion and a stripped portion arranged therebetween,
wherein the stripping tool comprises :
   - a core with at least one receiving through hole having an insertion portion and an opposed portion,
   - at least one lever,
   - a spring arranged to apply a return force on the at least one lever,
wherein the lever has a proximal portion rotatably connected to the core, a distal portion arranged in front of the opposed portion to allow forced insertion of the at least one electrical wire, and an abutting tab portion arranged on the distal portion to remove the insulated end portion from the at least one electrical wire when the electrical wire is fully inserted in the stripping tool and pulled out.

Advantageously, the receiving portion has a through hole with an insertion side and an opposed side, the receiving portion being preferably conical in shape.

This allows to ensure a correct insertion of the electric wire in the receiving portion. Also, it is to be noted that the end portion equipped with the insulating sheath facilitates the insertion compared to a stripped end wherein the strands may be curved or bent and difficult to insert in the receiving portion.

Advantageously, the electrical wire has a cross-section from 0,13 mm² up to 2.5 mm².

Advantageously, the electrical wire has a cross-section from 2.5 mm² up to 4 mm², or from 2.5 mm² up to 6 mm².

Alternatively, the electrical wire may have a smaller or larger cross-section than the values disclosed herein.

Advantageously, the electrical wire has a cross-section from 0,1 mm² to 0.2 mm², 0,1 mm² to 0.5 mm², 0,1 mm² to 1 mm².

Advantageously, the through hole has a diameter on the insertion side larger than 5 mm and a diameter on the opposed side larger than 3 mm, in particular for electrical wire having a cross-section from 0,13 mm² up to 2.5 mm².

Advantageously, the through hole has a diameter on the insertion side larger than 10 mm and a diameter on the opposed side larger than 6 mm, in particular for electrical wire having a cross-section from 2.5 mm² up to 6 mm².

Alternatively, the diameter of the through hole on the insertion side and the diameter on the opposed side may be smaller or larger than the values disclosed herein for electrical wires having smaller and larger cross-sections.

Advantageously, the through hole has a diameter on the insertion side larger than 3 mm, preferably larger than 4 mm, more preferably larger than 6 mm, and a diameter on the opposed side larger than 2 mm, preferably larger than 4 mm, more preferably larger than 5 mm.

This allows for an easy insertion of the electrical wires.

Advantageously, the stripping tool has a plurality of receiving portions, preferably two or more, more preferably seven or more.

This allows to place and receive a plurality of electric wires and increase the number of wires being welded or spliced.

Advantageously, the end portion of the electric wire is separated from a main portion of the electric wire by a pre-stripped portion, and wherein the abutting tab portion is arranged to abut with the end portion of the electric wire on the side of the pre-stripped portion, when the end portion of the electric wire is inserted inside the receiving portion.

This allows to provide partially pre-stripped wires so as to enhance the productivity, in particular due to the problem of positioning, storing and inserting of wires, including multi-strands wires.

Advantageously, the guiding portion is arranged between the abutting portion and an articulated portion of the lever.

This allows to ease the insertion of the electric wire and the deflection of the lever.

Advantageously, the body is made of plastic, and preferably by additive manufacturing or three-dimensional printing.

This allows to facilitate the manufacturing and control of costs.

Alternatively, the body is made of metal, and preferably by additive manufacturing or three-dimensional printing.

Advantageously, the elastic member, the lever and/or a lever shaft of the stripping tool are made in metal, preferably steel or copper. The lever is preferably made in a soft metal to avoid scratching.

This allows to facilitate the insertion of the electric wire, to allow sufficient force transmission for stripping, and life time of the stripping tool.

Alternatively, the elastic member, the lever and/or a lever shaft of the stripping tool are made in plastic.

Advantageously, the elastic member, the lever and/or a lever shaft of the stripping tool are made in plastic, with a coating preferably in steel or copper, or harder material than plastic.

A second aspect of the present disclosure concerns an automated system comprising the stripping tool according to the first aspect, a welding machine being preferably an ultrasonic welding machine or a splicing machine, and a robot arm arranged to transport one or more electric wires from the stripping tool to the welding machine or the splicing machine.

This allows to solve the mentioned problem as follows. That is, the problem of inserting wires in welding or splicing area by hand with its consequent mistakes, is solved by an automated system manipulation of wires, with a robot arm for example. Additional efficiencies are possible when the automated system has at least two pallets, also known as connector pallets. The robot arm removes a first wire or first set of wires from a first stripping tool installed on a first pallet while the automated system is simultaneously inserting a second wire or second set of wires into a second stripping tool installed on a second pallet. It is thereby possible for the robot arm to work with the first wires from the first pallet, e.g., to perform the stripping step and/or a splicing or welding step during the time the automated system is inserting the second wires into the second stripping tool on the second pallet or doing the pre-stripping step. Utilizing multiple pallets in this manner results in cycle time efficiencies. That is, there is no penalization on plugging cycle time.

The problem of misaligned wires manipulated by an operator or missing wires is solved by the stripping tool that is installed on a connector pallet nearby the robot arm that presents all wires in a perfectly aligned manner. Parts of the automated system may be used from a Zeta/Omega machine available from the company Komax Holding AG.

The problem of taking wires and aligning them perfectly is assured by a single or a double gripper system (e.g. a gripper portion and an aligner portion) in the robot arm of the automated system that keep the ends of the wires aligned as well as place them preferably horizontally or vertically.

The problem of making dual end splicing instead of only butt splice is ensured by an additional (fixed) gripper placed on an extremity of the welding machine (or module, or splicing machine) that will hold the wires on one side of the splice while the robot arm picks the other extremity wires and take them to the machine.

Further, this allows to have the following advantages:
1. Elimination of manual work,
2. Dramatic reduction of quality problems related to manual splicing,
3. High flexible solution in terms of cross-section of wires or number of wires, and possibility to have butt and dual end (inline) configurations,
4. Quick cycle time,
5. Integration on automatic plugging machine,
6. Very low investment,
7. Floor space reduction,
8. Automation percentage increase on harness or wire industry,
9. 100% (full) control on splicing process with traceability.

Still further, this eliminates a big roadblock of the one skilled in the art that was: "splicing is an impossible process for automation".

Advantageously, the arm comprises a mobile gripper portion arranged to grab the one or more electric wires and/or an aligner portion arranged to maintain alignment of the one or more electric wires.

This allows to grab and pull the electric wires and to keep them aligned or in their respective positions when there are several wires.

Advantageously, the automated system has a pallet, preferably vertically installed, and the stripping tool is installed on the pallet.

In an embodiment, the pallet is installed on a machine available on the market, such as from the company Komax Holding AG (Omega machine or the like).

Advantageously, the robot arm comprises a fixed gripper portion arranged to grab the one or more electric wires nearby, or in front of, the welding machine or the splicing machine.

This allows to have dual end splicing or welding.

Advantageously, the automated system comprises a control unit.

Advantageously, the automated system comprises a processing unit.

Advantageously, the automated system comprises a positioning unit for positioning the robot arm, the aligner portion and/or the mobile gripper portion.

Advantageously, the automated system comprises a mapping unit for storing or receiving the position of the stripping tool, and in particular of the one or more receiving portions, and position of the other components such as the welding machine or splicing machines, the storage of the wires, etc.

Advantageously, the automated system comprises a detection unit configured to detect the one or more receiving portions, the one or more electric wires, or any other object.

Advantageously, the automated system comprises a power storage or a general electric supply connection.

Advantageously, the automated system has a first pallet on which a first stripping tool is installed and a second pallet on which a second stripping tool is installed.

The first pallet and/or the second pallet may be fixed or mobile.

In a third aspect, the present disclosure concerns a method using the automated system of the second aspect for automatic welding or splicing of at least one electric wire having an electric conductor covered by an insulating sheath and an end portion thereof, wherein the electric conductor has strands or monolithic electric element,
the method comprising the steps consisting of :
   - a) inserting the end portion of the electric wire into the receiving portion of the stripping tool,
   - b) abutting the end portion of the electric wire on the abutting tab portion,
   - c) removing the end portion of the electric wire from the receiving portion so as to strip the electric wire,
   - d) optionally repeating steps a) to c) for another electric wire or another set of wires,
   - e) transporting the one or more stripped end portions to the welding machine or splicing machine,
   - f) welding or splicing strands of the at least one electric wire, or
welding or splicing strands or monolithic electric elements of at least two electric wires.

This allows to have the above mentioned advantages.

Advantageously, the repeated steps are not per wire but per stripping tool, once every time the robot arm pulls out the wires from the stripping tool, it pulls all wires at same time and strips all wires at the same time (all wires that are inserted in that stripping tool) it can be repeated for second or third or more stripping tools that may be installed on the pallet.

Advantageously, the end portion of the electric wire is separated from a main portion of the electric wire by a pre-stripped portion, and the method further comprising the step of :
- b1) abutting the end portion of the electric wire on the abutting tab portion on the side of the pre-stripped portion.

In other words, the step b1) consists in placing the end portion of the electric wire in abutment with the lever, the abutment being between the abutting portion of the lever and the side of the pre-stripped portion of the end portion.

This allows for an easier automated stripping of the wires.

Advantageously, the method further comprises the steps of :
- c1) grabbing the one or more electric wires with the mobile gripper portion, and/or
- c2) pinching the one or more electric wires with the aligner portion of the arm so as to maintain alignment of the one or more electric wires.

This allows for removal of the wires from the stripping tool and to keep alignment of the wires.

Advantageously, the mobile gripper portion is moved to the stripping tool and closes with the wires inside of or within the gripper, in particular between two jaws of the mobile gripper portion, the wires being preferably not pressed or gripped by the jaws so that the mobile gripper portion can slide along the wires until the mobile gripper portion reaches a desired position.

Advantageously, once the mobile gripper portion is in the desired position, the aligner portion may move from a backward position towards the wires to a frontward position wherein the wires are received within a jaw of the aligner portion.

Advantageously, once the aligner portion is in position, the mobile gripper portion may press the wires and then pull them out of the stripping tool, and then the jaw of the aligner portion is preferably closed to maintain alignment of the wires.

Advantageously, the mobile gripper portion comes to the stripping tool and closes with the wires inside of the mobile gripper portion, the wires being preferably not pressed so that the mobile gripper portion can slide along the wires until the mobile gripper portion reaches its desired position,
- the aligner portion moves frontward from a backward (rest) position to receive the wires within the aligner portion,
- once the aligner portion is in position, the mobile gripper portion presses the wires and then pulls them out of the stripping tool, and then the aligner portion is preferably closed to maintain alignment of the wires.

Advantageously, the method further comprises the steps of :
- e2) grabbing a first electric wire on a first side in position to be spliced or welded by the welding machine or the splicing machine,
- e3) positioning a second electric wire in position to be spliced or welded by the welding machine or the splicing machine, on the first side of the welding machine, or splicing machine, or on a second side of the welding machine or splicing machine, opposite to the first side,
- f1) welding or splicing strands, or monolithic electric elements, of the two electric wires.

This allows to provide a solution for butt or dual end splicing or welding.

Advantageously, the method further comprises the steps of :
- providing an automated system with a first pallet and a second pallet,
- installing a first stripping tool on the first pallet and a second stripping tool on the second pallet.

This allows the automated system to perform the stripping step and/or splicing or welding step on the one or more wires while continuing to work on the second pallet (for e.g. for pre-stripping and/or inserting one or more wires in the second stripping tool).

### BRIEF DESCRIPTION OF THE DRAWINGS

Other features, purposes and advantages of the disclosure will become more explicit by means of reading the detailed statement of the nonrestrictive embodiments made with reference to the accompanying drawings
[fig. 1] illustrates a stripping tool according to a first embodiment and an embodiment of a robot having the stripping tool, with electric wires to be stripped,
[fig. 2] illustrates the stripping tool having a lever in a rest position,
[fig. 3] illustrates the stripping tool having the lever in the deflected position,
[fig. 4] illustrates a front view of a body of the stripping tool,
[fig. 5] illustrates the robot arm in a position wherein a mobile gripper portion and an aligner portion of the robot arm are closed,
[fig. 6] illustrates the robot arm in a position wherein the mobile gripper portion and the aligner portion position electric wires nearby a welding machine,
[fig. 7] illustrates a detailed view of the robot arm,
[fig. 8] illustrates a detailed view of a specific embodiment of the lever,
[fig. 9] illustrates a detailed view of a specific embodiment of the aligner portion.

### DETAILED DESCRIPTION

The present disclosure relates to a stripping tool for stripping electric wires, to an automated system with a robot arm to manipulate the electric wires from the stripping tool to a welding or splicing machine, and to a method for automatic welding or splicing electric wires using the automated system.

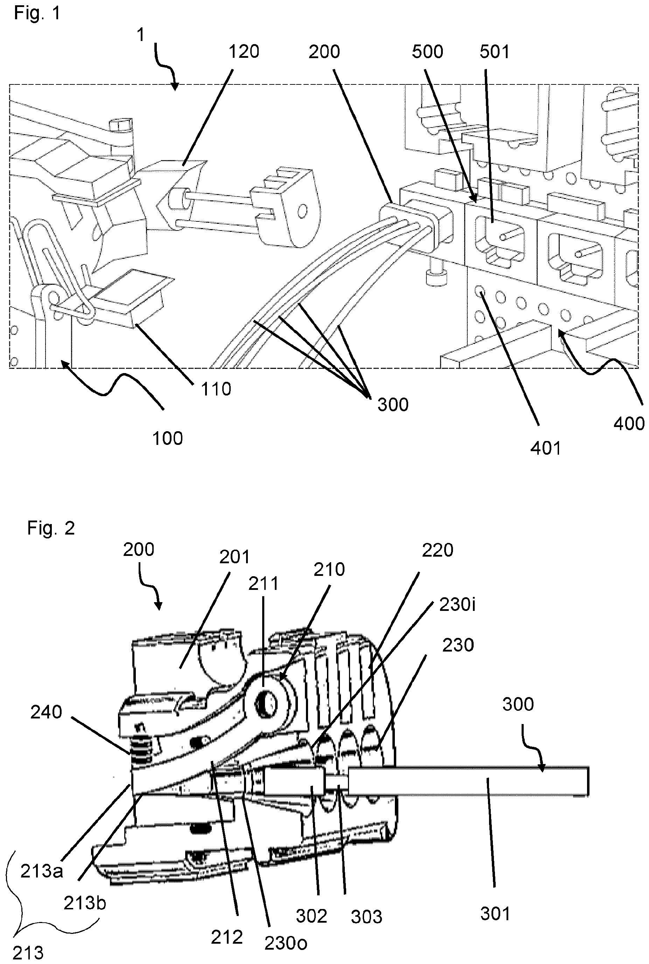

Figure 1 illustrates a stripping tool 200 according to a first embodiment and an embodiment of an automated system 1 having the stripping tool 200, with electric wires 300 to be stripped.

The automated system 1 has a movable robot arm 100, and is able to grab the electric wires 300 with a mobile gripper portion 110 (e.g. a mechanical clamp or mechanical gripper) and/or to align said electric wires 300 with an aligner portion 120 (e.g. a movable jaw). The mobile gripper portion 110 and the aligner portion 120 are mounted on the arm 100. The mobile gripper portion and the aligner portion are preferably pneumatically and/or electrically actuated.

The stripping tool 200 is arranged to receive the electric wires 300 placed therein by an operator or by the automated system 1. The stripping tool 200 is placed on a rack 500, in a receiving rack portion 501 of the rack 500. The receiving rack portion is typically called a holder or connector holder. The rack 500 is placed on a pallet 400, and could be fixed to it by fixing means (e.g. fixing screw(s) screwed in fixing hole(s) 401 of the pallet 400).

The automated system 1 may take the electric wires 300 from a storage portion, preferably positioned on the rack 500, in another receiving rack portion 501.

Figure 2 illustrates the stripping tool 200 having a lever 210 in a rest position.

The stripping tool 200 has a body 201 preferably formed by 3D printing and made of plastic. The body 201 has one or more receiving portions 230 to receive one or more electric wires 300 to be stripped. The lever 210 has an articulated portion 211, which could rotate with respect to the body by means of a lever shaft. The lever 210 further have a guiding portion 212 and an abutting tab portion 213. The stripping tool 200 further has an elastic member 240 (e.g. a coil spring or a spiral spring) arranged to apply a return force on the lever 210 between a deflected position and a rest position, that is to say the elastic member 240 forces the lever 210 in the rest position. The elastic member 240 is represented in figure 2 between the body 201 and the lever 210 away from the articulated portion 211 (e.g. at the level of the abutting tab portion 213), but the elastic member 240 could be also a spiral spring arranged on the articulated portion 210, applying a rotating torque. The lever 210 is housed by the body 201 in slots 220, that is to say the lever 210 is preferably inside the body 201. The body 201 may have as many slots 220 and levers 210 as receiving portions 230. The slots 220 are preferably arranged above the receiving portions 230 (alternatively below the receiving portions 230), and may each house one lever 210. The abutting tab portion 213 has a distal end abutting portion 213a and pinching abutting portion 213b. As it will be explained with more details below, the distal end abutting portion 213a of the abutting tab portion 213 will be of help when the electric wires 300 are of pre-stripped type, while the pinching abutting portion 213b of the abutting tab portion 213 will be of help when the electric wires 300 are not pre-stripped.

The electric wires 300 each have an electric conductor therein covered by an insulating sheath. The electric wires 300 may have multiple (conductive) strands therein or a monolithic electric conductor, both generally in copper or any other conductive material. The insultation or sheath could be in an insulative material, such as plastic or PVC. The electric wires 300 preferably each have a main portion 301 which is insulated, an end portion 302 with an insulation and a (pre) stripped portion 303 between the main portion 301 and the end portion 302. The end portion 302 is not fully pre-stripped to facilitate the insertion in the receiving portion 230, that is to say it is just partially stripped. Further, it is very useful to strip the end portion 302 just before use for welding or splicing, in particular when the electric wires 300 have multiple strands therein, which may spread in various directions (and could be difficult to transport or store).

It is to be noted that the receiving portion 230 is preferably conical in shape to further facilitate the insertion of the electric wire 300, the diameter of the opening being preferably 5.5 mm on the insertion side 230i, 3.65 mm on the opposite side 230o, the length of the cone being 5.5 mm, and the distance between the centerline of adjacent receiving portions 230 being preferably 5.6 mm so as to ensure a high rate of successful automatic insertion of the electric wires 300 in the receiving portions 230. These values are of particular interest for electrical wires having a cross-section between 0.13 mm and 2.5 mm².

In figure 2, the electric wire 300 is represented partly inserted in the receiving portion 230, in cross-sectional view.

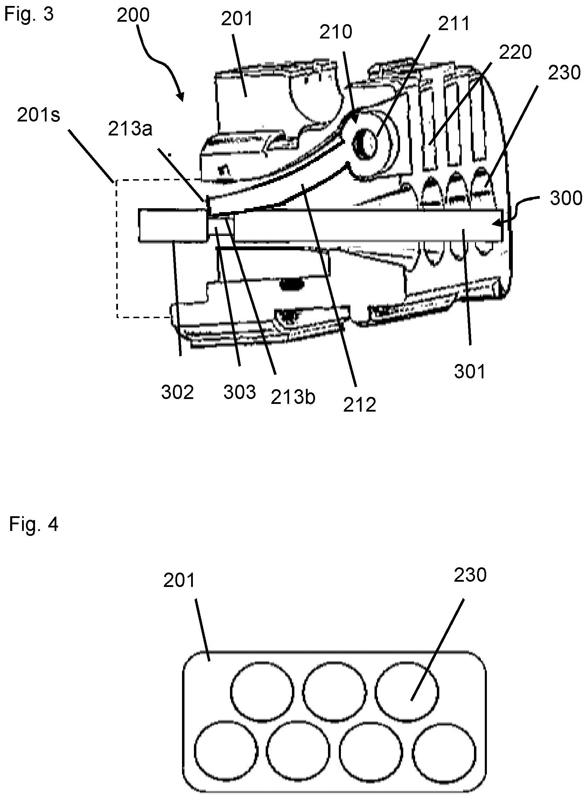

Figure 3 illustrates the stripping tool 200 having the lever 210 in the deflected position, in cross-sectional view.

In contrast with figure 2, in figure 3 the electric wire 300 is fully inserted in the receiving portion 230, preferably up to, or nearby, an optional stop portion 201s of the body 201.

The electric wire 300 has been guided by the guiding portion 212 of the lever 210 up to the full insertion of the electric wire 300 in the stripping tool 200. That is to say, the end portion 302 of the electric wire 300 is fully inserted in the stripping tool 200, up to the contact of the abutting portion 213 with the end portion 302, and preferably up to the contact of the distal end abutting portion 213a with the pre stripped portion 303.

The end portion 302 is represented in abutment with the abutting portion 213 (in particular with the distal end abutting portion 213a). The pinching abutting portion 213b may be in contact with the (pre) stripped portion 303.

When the operator or the robot arm 100 pulls out the electric wires 300 from the receiving portion 230, the abutting portion 213, in particular the distal end abutting portion 213a, will apply a stripping effort on the insulation of the end portion 302 and will remove the insulation or sheath from the end portion 302, so as to form a stripped end portion 304.

The electric wire 300 will be now be ready for welding or splicing, and as to be moved nearby or in front of the welding machine (preferably an ultrasonic welding machine using vibrations) or the splicing machine.

It is to be noted that, in case the wire 300 is not pre-stripped, the abutting portion 213, in particular the pinching abutting portion 213b will apply a stripping effort on the sheath when the electric wire 300 is removed from the receiving portion 230, and an end portion of the sheath will be removed from the end portion 302 of the electric wire 300, so as to form the stripped end portion 304 of the electric wire 300.

The body 201 may further have the optional stop portion 201s or final abutment portion to limit the full insertion of the electric wire 300 as necessary.

Figure 4 illustrates a front view of a body 201 of the stripping tool 200.

The stripping tool 200 may have for example seven receiving portions 230 arranged in two or more rows.

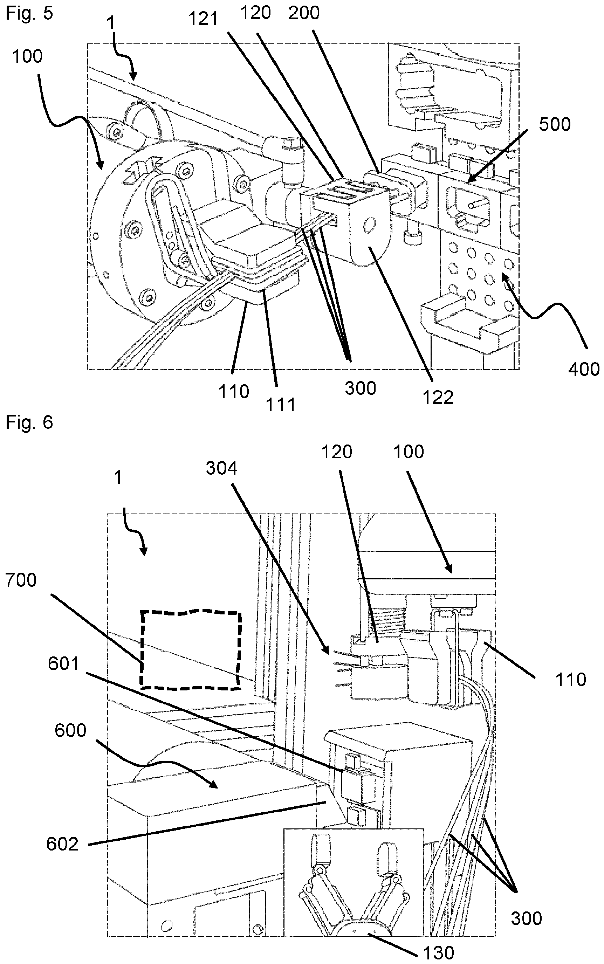

Figure 5 illustrates the robot arm 100 in a position wherein the mobile gripper portion 110 and the aligner portion 120 are closed on the electric wires 300.

The electric wires 300 are pinched by the aligner portion 120, so as to keep the alignment of the electric wires 300. The aligner portion 120 is preferably a jaw with at least one moving part 122 separated from a fixed part 121 by one or more columns (compare figure 1 wherein the aligner portion 120 is open with figure 5 wherein the aligner portion 120 is closed).

The mobile gripper portion 110 firmly grabs the electric wires 300 so as to remove the electric wires 300 from the stripping tool 200. As the stripping effort may be important, the mobile gripper portion 110 may be equipped with friction pads 111 (e.g. in elastomer).

Figure 6 illustrates the robot arm 100 in a position wherein the mobile gripper portion 110 and the aligner portion 120 position the electric wires 300 nearby a welding machine 600 or a splicing machine.

The stripped end portion 304 of the electric wires 300 are visible in figure 6. They are oriented by the aligner portion 120. They could be parallel to each other or with a small angle (e.g. 10 degrees or more, 20 degrees or more, 30 degrees or more) according to the need and the welding or splicing conditions (or specifications).

Compared to figure 5, in figure 6 the arm 100 moved the electric wires 300 to the welding machine 600 or the splicing machine, and rotates so as to place the stripped end portion 304 in a vertical position, which is of interest in particular when the welding machine 600 is an ultrasonic welding machine.

The ultrasonic welding machine 600 may have a first component 601 opposed to a second component 602, so as to act on the electric wires 300 and weld (or splice) them together in a known manner. These are typically static parts that do not vibrate. The vibrating part is the so called sonotrode and it is located at the bottom of the welding area or splicing area. Once wires are placed in the welding position, the first component 601 moves forward and presses the wires 300 down in the direction of the sonotrode. Once wires 300 are pressed with pre-set pressure value (programmed on the ultrasonic welding machine), the sonotrode (bottom part) starts vibrating and welding is made.

It is possible to provide a butt welding from one side or to provide a dual end (in line) welding from two sides. In the latter case, the electric wires 300 have to be grabbed by a fixed gripper portion 130 in front of the welding machine 600, and the robot arm 100 has to move back to collect other electric wires 300 (and repeat steps to have stripped electric wires 300 from the stripping tool 200) and move them to the other side (opposite side) of the welding machine 600 or splicing machine. Then, the dual end welding or splicing is possible.

The automated system 1 may further have a general unit 700 having a control unit, a processing unit, and/or a positioning unit for positioning the arm 100, the aligner portion 120 and/or the mobile gripper portion 110. The general unit 700 may be able to command the gripper portions 110, 130, the aligner portion 120, the arm 100, the welding machine 600 and other listed or non-listed components of the automated system 1. The general unit 700 may further have a mapping unit for storing or receiving the position of the stripping tool 200, and in particular of the one or more receiving portions 230.

The automated system 1 may comprise a detection unit configured to detect the one or more receiving portions 230, the one or more electric wires 300, or any other object. The general unit 700 may comprise a power storage or a general electric supply connection.

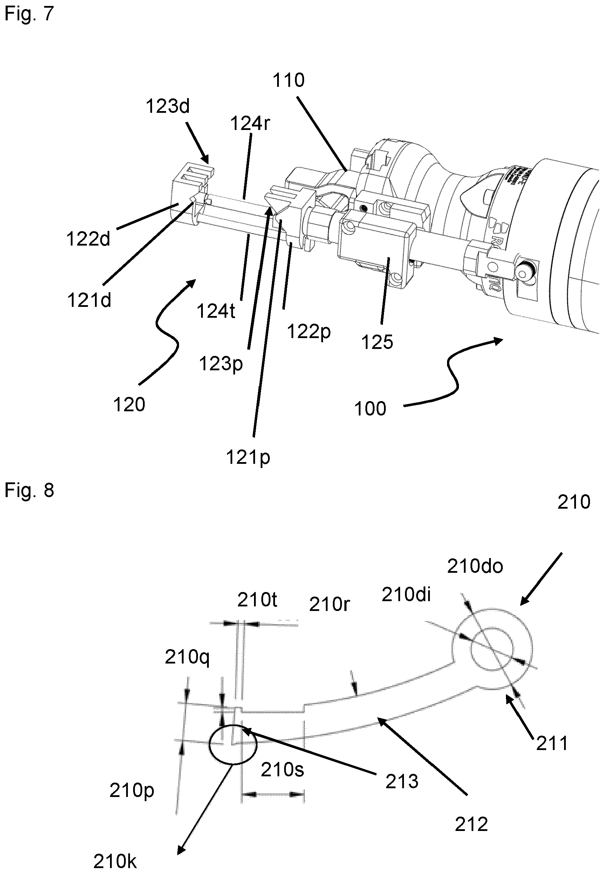

Figure 7 illustrates a detailed view of the robot arm 100 of the automated system 1.

The arm 100 is equipped with the gripper portion 110 and the aligner portion 120 as mentioned above. The aligner portion 120 is represented in an open position.

The aligner portion 120 has preferably the following components: a translatable column 124t for linking a proximal portion 122p of a jaw with a distal portion 122d of the jaw, and allowing the distal portion 122d to move back and forth towards the proximal portion 122p; and/or a rotatable column 122r so as to allow rotation of the proximal portion 122p and distal portion 122d.

The aligner portion 120 may further have a proximal lock portion 121p to be connected and locked with a distal lock portion 121d, the lock portion being preferably a protrusion and a corresponding recess, in particular of triangle shape.

The aligner portion 120 may further have a proximal pinching portion 123p and a distal pinching portion 123d arranged to pinch the electric wires 300 presented therebetween. The pinching portions 123p, 123d are preferably of corresponding shapes, in particular of triangle shape, so as to ensure a correct alignment of the electric wires 300 therebetween.

The aligner portion 120 may further have a servomotor 125 to command the movement of the above mentioned components of the aligner portion 120. It is to be noted that the gripper portion 110 may also have a servomotor for the same aim.

Figure 8 illustrates a detailed view of a specific embodiment of the lever 210, for which improved results are appreciated, in particular for wires from 0.13 mm to 2.5 mm².

The lever 210 has the abutting tab portion 213, the articulated portion 211 and the guiding portion 212 as mentioned above. The articulated portion 211 may have an outside diameter 210do of 4mm, and an internal diameter of 2.1 mm. The guiding portion 212 may be curved or bended and preferably has a curved radius 210r of 23.27 mm. The tab portion 213 may be equipped with a recess 210s and a projection 210t, 210q to facilitate the stripping. Typical values for the recess length are 3.1 mm, 0.2 mm high for the projection (210q) and 0.33 mm long for the projection (210t). The abutting portion 213 is typically 1.86 mm high (210p). The edge 210k of the abutting portion 213 is preferably rounded with small radius such as e.g. 0.1 mm or 0.05 mm, and may be equipped with a spout or a beak to avoid any scratching during stripping. Smoothing or chamfering the edge 210k with very small radius or with the spout prevents scratching or pulling of the wire conductor.

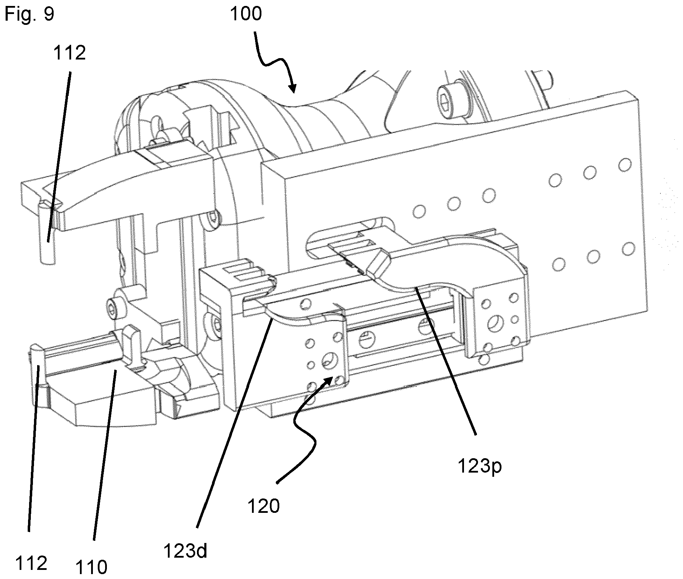

Figure 9 illustrates a detailed view of a specific embodiment of the aligner portion 120.

The aligner portion 120 may further have the proximal pinching portion 123p and the distal pinching portion 123d arranged to pinch the electric wires 300 presented therebetween, as mentioned above. The pinching portions 123p, 123d are preferably of corresponding shapes, in particular of rounded and curved shape, so as to ensure a correct alignment of the electric wires 300 therebetween.

Once the proximal pinching portion 123p and the distal pinching portion 123d are closed, the alignment of the electrical wires 300 is ensured and preferably results in the wires 300 being arranged adjacent one another in a line (rather than bunched into a triangle shape or some other partially stacked arrangement).

Further, in the example illustrated in figure 9, the aligner portion 120 is moved by a double movement pneumatic actuator that may move both sides of the aligner portion 120 at same time.

Finally, one or more locking teeth 112 may be provided on the mobile gripper portion 110 to ensure that wires 300 do not slip outside of the gripper 110. The same may apply to the fixed gripper 130.

It will be understood that various modifications and/or improvements obvious to the person skilled in the art may be made to the various embodiments of the disclosure described in the present description without departing from the scope of the disclosure defined by the appended claims. The different embodiments can be combined whenever possible or necessary.

## Claims

1. A stripping tool (200) for stripping an end portion (302, 304) of an electric wire (300) having an electric conductor covered by an insulating sheath, the stripping tool (200) comprising :
- a body (201) with at least one receiving portion (230) arranged to receive the end portion (302, 304) of the electric wire (300),
- at least one lever (210) articulated with the body (201) so as to be moveable between a rest position and a deflected position,
- an elastic member (240) arranged to apply a return force on the at least one lever (210) from the deflected position to the rest position,
wherein the lever (210) has a guiding portion (212) arranged in front of the receiving portion (230), so that the at least one lever (210) is moved from the rest position to the deflected position by insertion of the end portion (302, 304) of the electric wire (300) into the receiving portion (230), and
wherein the lever (210) has an abutting tab portion (213) arranged to apply a stripping effort to the end portion (302, 304) of the electric wire (300) during removal of the end portion (302, 304) of the electric wire (300) out of the receiving portion (230).

2. The stripping tool (200) according to claim 1, wherein the receiving portion (230) has a through hole with an insertion side (230i) and an opposed side (230o), the receiving portion (230) being preferably conical in shape.

3. The stripping tool (200) according to the preceding claim, wherein the through hole has a diameter on the insertion side (230i) larger than 5 mm and a diameter on the opposed side (230o) larger than 3 mm.

4. The stripping tool (200) according to any one of the preceding claims, wherein the stripping tool (200) has a plurality of receiving portions (230), preferably two or more, more preferably seven or more.

5. The stripping tool (200) according to any one of the preceding claims, wherein the end portion (302, 304) of the electric wire (300) is separated from a main portion (301) of the electric wire (300) by a pre-stripped portion (303), and wherein the abutting tab portion (213) is arranged to abut with the end portion (302, 304) of the electric wire (300) on the side of the pre-stripped portion (303), when the end portion (302, 304) of the electric wire (300) is inserted inside the receiving portion (230).

6. The stripping tool (200) according to any one of the preceding claims, wherein the guiding portion (212) is arranged between the abutting portion (213) and an articulated portion (211) of the lever (210).

7. The stripping tool (200) according to any one of the preceding claims, wherein the body (201) is made of plastic, and preferably by additive manufacturing or three-dimensional printing.

8. The stripping tool (200) according to any one of the preceding claims, wherein the elastic member (240), the lever (210) and/or a lever shaft of the stripping tool (200) are made in metal, preferably steel or copper.

9. An automated system (1) comprising the stripping tool (200) according to any one of the preceding claims, a welding machine (600) being preferably an ultrasonic welding machine or a splicing machine, and a robot arm (100) arranged to transport one or more electric wires (300) from the stripping tool (200) to the welding machine (600) or the splicing machine.

10. The automated system (1) according to the preceding claim, wherein the robot arm (100) comprises a mobile gripper portion (110) arranged to grab the one or more electric wires (300) and/or an aligner portion (120) arranged to maintain alignment of the one or more electric wires (300).

11. The automated system (1) according to the preceding claims 9 or 10, further comprising a fixed gripper portion (130) arranged to grab the one or more electric wires (300) nearby, or in front of, the welding machine (600) or the splicing machine.

12. A method using the automated system of claims 9 to 11 for automatic welding or splicing of at least one electric wire (300) having an electric conductor covered by an insulating sheath and an end portion (302, 304) thereof, wherein the electric conductor has strands or monolithic electric element,
the method comprising the steps consisting of:
- a) inserting the end portion (302, 304) of the electric wire (300) into the receiving portion (230) of the stripping tool (200),
- b) abutting the end portion (302, 304) of the electric wire (300) on the abutting tab portion (213),
- c) removing the end portion (302, 304) of the electric wire (300) from the receiving portion (230) so as to strip the electric wire (300),
- d) optionally repeating steps a) to c) for another electric wire (300) or another set of wires,
- e) transporting the one or more stripped end portions (302, 304) to the welding machine (600) or splicing machine,
- f) welding or splicing strands of the at least one electric wire (300), or welding or splicing strands or monolithic electric elements of at least two electric wires (300).

13. The method according to the preceding claim, wherein the end portion (302, 304) of the electric wire (300) is separated from a main portion (301) of the electric wire (300) by a pre-stripped portion (303) ,
the method further comprising the step of :
- b1) abutting the end portion (302, 304) of the electric wire (300) on the abutting tab portion (213) on the side of the pre-stripped portion (303).

14. The method according to claims 12 or 13, further comprising the steps of :
- c1) grabbing the one or more electric wires (300) with the mobile gripper portion (110), and/or
- c2) pinching the one or more electric wires (300) with the aligner portion (120) of the arm (100) so as to maintain alignment of the one or more electric wires (300).

15. The method according to any one of claims 12 to 14, further comprising the steps of :
- e2) grabbing a first electric wire (300) on a first side in position to be spliced or welded by the welding machine (600) or the splicing machine,
- e3) positioning a second electric wire (300) in position to be spliced or welded by the welding machine (600) or the splicing machine, on the first side of the welding machine (600), or the splicing machine, or on a second side of the welding machine (600) or the splicing machine, opposite to the first side,
- f1) welding or splicing strands, or monolithic electric elements, of the two electric wires (600).

16. The method according to any one of claims 12 to 15, further comprising the steps of :
- providing a first pallet and a second pallet,
- installing the stripping tool on the first pallet and a second stripping tool on the second pallet.

17. The method according to any one of claims 12 to 16, further comprising the steps of :
- moving the mobile gripper portion (110) to the stripping tool (200) and closing the wires (300) inside of the mobile gripper portion (110), the wires (300) being preferably not pressed so that the mobile gripper portion (110) can slide along the wires (300) until the mobile gripper portion (110) reaches a desired position,
- moving the aligner portion (120) frontward from a backward position to receive the wires (300) within the aligner portion (120), and
- once the aligner portion (120) is in the desired position, the mobile gripper portion (110) presses the wires (300) and then pulls them out of the stripping tool (200), and then the aligner portion (120) is preferably closed to maintain alignment of the wires (300).
